# FASCICULE DE BREVET EUROPEEN

(11) **EP 3 010 162 B1**
(45) Date de publication et mention de la délivrance du brevet: **31.01.2018**
(21) Numéro de dépôt: 15189143.9
(22) Date de dépôt: 09.10.2015
(51) Int. Cl.: H04B 7/185, H04L 29/08

(54) **ARCHITECTURE D'UN RÉSEAU DE TÉLÉCOMMUNICATION**
AUFBAU EINES FUNKNETZES
ARCHITECTURE OF A TELECOMMUNICATION NETWORK

(30) Priorité: 14.10.2014 FR 1402315
(43) Date de publication de la demande: 20.04.2016
(73) Titulaire: THALES, 92400 Courbevoie (FR)
(72) Inventeur: MICHEL, Cyril, 31100 TOULOUSE (FR); CHUBERRE, Nicolas, 31820 PIBRAC (FR)
(74) Mandataire: Dudouit, Isabelle

(56) Documents cités:
- WO-A2-2010/081160
- US-A1- 2002 031 102
- US-A1- 2002 077 099
- US-A1- 2005 210 121

## Description

L'invention concerne une architecture système pour un réseau de transmission de l'information numérique. Elle s'applique à l'échange de contenus véhiculés par l'Internet et concerne notamment les satellites géostationnaires de diffusion par satellites et la transmission de données par satellites non-géostationnaires de communication.

L'évolution de la richesse des contenus véhiculés par l'Internet combinée à une qualité d'expérience des usagers toujours grandissante, notamment dans l'instantanéité, que ce soit pour la consultation de contenu en ligne ou pour les jeux dont les parties sont mises en oeuvre entre joueurs éloignés, conduit les fournisseurs de contenu et les opérateurs de réseaux à déporter et à dupliquer le contenu, lorsque cela fait sens, au plus près des usagers.

Le développement de l'Internet a conduit à une explosion du trafic ces dernières années de par la richesse des données transportées, essentiellement par le fait que les flux concernés sont des programmes de vidéo à destination du grand public, par exemple NetFLix, Youtube, etc. Les réseaux de transit (fibres intercontinentales, réseaux nationaux), les réseaux de collecte (plus connus sous le terme de « backhauling » en anglais) et les réseaux d'accès ou « boucle locale » (« access network ») sont saturés. Cela engendre des pertes de paquets par les routeurs et la nécessité de retransmettre les programmes correspondants (des programmes de télévision ou vidéo) ainsi que les autres flux qui sont aussi impactés par voie de conséquence et de manière indifférenciée. L'augmentation de temps de transfert induite par ces retransmissions, due à une diminution des performances des réseaux, conduit à une dégradation de la qualité perçue par les usagers.

Pour tenter de résoudre ces problèmes, les opérateurs de réseaux ont déployé des infrastructures plus performantes en débit et permettant de transporter des volumes importants, mais c'est une course sans fin entre l'augmentation de la capacité des réseaux et celle de la richesse des contenus devant transiter sur ces mêmes réseaux ; à peine les nouvelles infrastructures sont-elles déployées que des nouveaux standards d'encodage de contenu sont disponibles (SDTV, HDTV, 4K, 8K, ...).

Une approche alternative a donc été proposée par les acteurs de l'Internet exploitant des réseaux de télécommunication afin d'offrir une meilleure qualité d'expérience (QoE) aux usagers finaux (délai d'accès au contenu, richesse du contenu): des architectures spécifiques de stockage, de gestion, d'accès au contenu et de gestion des requêtes des usagers, connues sous la dénomination de Content Delivery Network ou CDN permettent grâce à la duplication du contenu dans des « caches » placés au plus près des usagers de diminuer le taux de contention dans les réseaux de transit et donc le délai d'accès à ce même contenu.

Ces CDN ont été mis en place dans les réseaux terrestres et placés dans les réseaux d'infrastructures des opérateurs de télécommunication.

Néanmoins les infrastructures terrestres large bande ne peuvent atteindre tous les abonnés, notamment pour des raisons économiques, le coût de déploiement des fibres optiques, de réseaux cuivrés ADSL, ou de réseaux sans fil terrestre de quatrième (4G) ou de cinquième génération (5G) pouvant être rédhibitoire lorsque la densité d'abonnés devient trop faible.

Certains acteurs ont donc proposé dans le passé ou plus récemment, le déploiement de constellations de satellites en orbite non géostationnaires NGSO (en orbite basse: entre 500 et 2 000 km d'altitude, en orbite moyenne, entre 6 000 et 20 000 km d'altitude). Ce type de solutions présente un délai de propagation compatible de ceux rencontrés dans les réseaux terrestres, soit quelques dizaines de millisecondes (ms) pour les orbites les plus basses. Par contre, le déploiement d'une telle constellation requière la mise en oeuvre de plusieurs dizaines (voir les réseaux à satellites O3bNetworks, Globalstar ou Iridium, Skybridge) à plusieurs centaines de satellites (voir Teledesic ou WorldVu) afin de garantir une continuité de services dans les zones habitées du globe terrestre. De plus, un satellite en orbite basse offre une capacité limitée par rapport à un satellite géostationnaire dans une configuration point à point comparable, mais permet de limiter le coût de l'infrastructure spatiale en utilisant plusieurs satellites par lanceur. De par leur altitude et la faible latence, ce type de satellites contribue à une mise en oeuvre efficace de réseau de télécommunication, avec des performances comparables à celles des réseaux terrestres.

Les satellites géostationnaires ou GEO (placés à une distance de 35 786 kms dans le plan de l'Equateur de la Terre), quant à eux, présentent l'avantage de couvrir une zone importante de la surface de la Terre (jusqu'à 1/3 de cette surface); un même contenu peut donc être reçu simultanément par plusieurs centaines de milliers, voire de millions d'usagers, réduisant par la-même le coût de transmission d'un même contenu dans la même proportion. Néanmoins, le délai de transmission d'un satellite géostationnaire (plus de 500 ms entre deux points de la Terre pour un trajet aller-retour) est très supérieur aux délais rencontrés dans les réseaux terrestres et incompatible pour des usagers temps réel ou avec la qualité d'expérience désormais rencontrée dans les réseaux terrestres (quelques dizaines de millisecondes), dans le cas où le contenu doit être téléchargé au travers d'un tel réseau géostationnaire dans un cadre interactif (comme par exemple lors d'une consultation sur une page Web au travers d'un navigateur). De plus, afin de contourner cet obstacle, des protocoles ou dispositifs spécifiques (par exemple le protocole «Performance Enhancement Proxy» en Anglais ou PEP) doivent être mis en oeuvre par les opérateurs de réseaux à satellites afin d'intégrer leurs solutions dans les réseaux terrestres, souvent au détriment de la sécurité.

La demande de brevet US 2002/0031102 décrit un système utilisant le service DSN pour permettre à un utilisateur d'accéder à Internet. D1 utilise un cache dynamique pour mémoriser les adresses IP les plus demandées.

La demande de brevet WO 2010081160 décrit un système et un procédé permettant d'optimiser les performances des communications dans un contexte WEB.

La demande de brevet US 2002/0031102 divulgue une méthode permettant à un utilisateur d'accéder la résolution d'adresse de serveurs via le protocole DNS. La méthode s'appuie sur au moins un satellite placé en orbite basse (LEO) ou moyenne (MEO) embarquant un serveur de nom de domaine (DNS) et dans que lequel sont embarqués des tables de résolution d'adresse de serveur. Si l'adresse IP recherchée par le terminal ne se trouve pas dans le cache du satellite, alors celui-ci relaie la requête vers un autre serveur DNS terrestre ou placé dans un autre satellite sur une altitude plus élevée.

Dans ce document, le mot « CDN » désigne un ensemble de serveurs reliés en réseau et qui coopèrent afin de mettre à disposition du contenu ou des données à des utilisateurs au travers de caches, un micro-cache correspond à un cache situé au niveau d'un réseau satellitaire géostationnaire ou non géostationnaire, un nano-cache désigne un cache qui est situé au niveau d'un accès utilisateur au plus proche d'un utilisateur (au niveau du terminal usager lui-même du réseau satellitaire, servant une boucle locale auxquels sont connectés un ensemble d'utilisateurs - cas d'un village ou d'une petite entreprise par exemple -, ou bien servant un seul utilisateur - cas d'un foyer par exemple -). Le terme « cache » est bien connu de l'homme du métier et ne sera pas explicité.

On désignera par les expressions « utilisateur final », « usager final », un utilisateur ou usager qui accède à un contenu de données ou qui transfère des données vers le réseau pour un échange de données avec d'autres usagers, et ce via un terminal destiné à interagir avec un réseau de télécommunication - qu'il soit terrestre, ou non.

La description préliminaire indique que le critère d'altitude est essentiel pour délivrer un service permettant à un réseau à infrastructures non-terrestres de s'intégrer dans les réseaux terrestres, le délai de propagation étant essentiel. Au-delà des satellites non-géostationnaires, d'autres types de plateformes remplissent ce critère: les drones (avions non pilotés) et les ballons stratosphériques (ballons stabilisés). Par la suite, l'expression « véhicule en orbite basse » désignera donc un satellite non géostationnaire, un ballon stratosphérique, un drone, par exemple. La terminologie NGSO s'étend donc dans la suite du brevet à l'expression « véhicule en orbite basse ».

Un réseau NGSO est un réseau de télécommunication composé de stations utilisateurs terrestres, de stations d'accès terrestres connectées aux infrastructures de télécommunication, et à un ensemble de véhicules NGSO. Les stations utilisations terrestres sont interconnectées avec les stations d'accès au travers des véhicules NGSO.

L'invention repose notamment sur l'utilisation d'une architecture combinant les satellites géostationnaires GEO pour la diffusion des contenus les plus populaires ou anticipés par avance, et des véhicules NGSO pour l'accès aux services de télécommunication en temps réel, ou au contenu non stocké par ailleurs, suite à une distribution par les satellites GEO. Les données les plus consultées seront déposées au plus près des utilisateurs, dans un nano-cache, ce qui conduira à un accès plus rapide à ces données. Les données stockées dans ce nano-cache sont accédées avec un temps de réponse minimum par les usagers si l'anticipation est correcte. Si l'anticipation n'est pas correcte, un deuxième niveau de cache, ou micro-cache, stockant indifféremment tous les contenus en provenance des satellites géostationnaires, est possible au travers du réseau NGSO, offrant ainsi un niveau de performances en délai comparable à celui des réseaux terrestres. Les services temps réel, comme les jeux en réseaux, sont offerts via un réseau NGSO.

Cette architecture est donc complémentaire à celle des réseaux terrestres dans la mesure où un exploitant de CDN pourra l'utiliser en fonction des algorithmes de routage pour obtenir les meilleures performances. L'avantage de cette solution est qu'elle permet de fournir des services large bande en tout point du globe en s'affranchissant du besoin de déployer des infrastructures de collecte ou de transit. Les performances sont aussi garanties aux usagers en tout point de la Terre.

L'invention concerne un système de télécommunication pour la transmission d'informations numériques entre au moins un fournisseur de contenu F₁, et au moins un ensemble d'usagers U₁, comportant au moins les éléments suivants:
- un premier réseau à satellites géostationnaires R₁ comprenant au moins un premier satellite géostationnaire G₁, au moins une première station d'accès SAG₁ en liaison avec un ou plusieurs fournisseurs de contenu Fᵢ, au moins une première station d'abonné SG₂ au satellite géostationnaire, et au moins une deuxième station d'abonné SG₁ au satellite géostationnaire,
- un deuxième réseau à véhicules non géostationnaires R₂ comprenant au moins une première station d'accès au réseau SAN₁, au moins une première station d'usagers au réseau de véhicules non-géostationnaires SN₁, au moins un premier véhicule en orbite basse NG₁ comprenant des moyens adaptés à l'échange de données à faible latence entre la première station d'accès au réseau non géostationnaire et la première station d'usagers réseau à véhicules non géostationnaires,
- une boucle locale B₁ comprenant un ou plusieurs usagers Uᵢ,
- un premier nano-cache N₁ connecté à la station d'abonné SG₂ du réseau géostationnaire R₁ et adapté à stocker le contenu en provenance des fournisseurs de contenu (Fᵢ, i au moins égal à 1) en fonction du profil des usagers, le premier nano-cache N₁ est aussi connecté à la boucle locale B₁ et à la première station d'abonnés SN₁ du deuxième réseau non géostationnaire R₂,
- un premier micro-cache M₁ pour le stockage de contenu issu du ou des fournisseurs de contenu F₁, contenu reçu au travers de la station d'abonné SG₁ au premier satellite géostationnaire G₁; le premier micro-cache M₁ étant aussi connecté au deuxième réseau non géostationnaire R₂ via des stations d'accès SAN₁, cette connexion du premier micro-cache M₁ au deuxième réseau non géostationnaire R₂ étant directe éventuellement au travers d'un réseau terrestre T₁,
- au moins un cache CDN (CDN₁), comprenant un algorithme de routage adapté à déterminer un micro-cache à utiliser pour trouver le contenu requis par un usager et qui n'est pas stocké dans un nano-cache proche de l'usager.

Le système peut comporter des moyens de gestion de la mobilité des usagers abonnés au niveau des réseaux locaux.

La boucle locale B₁ est, par exemple, un réseau d'accès terrestre, de type Wifi, 4G, 5G ou FTTH.

Un réseau à véhicules en orbite basse peut être un réseau de satellites non géostationnaires.

Le réseau à véhicules en orbite basse comprend, par exemple, un ballon stratosphérique ou un drone ou un ensemble composé de satellites non-géostationnaires, de ballons stratosphériques et de drones, ou un ensemble mixte de ces trois types de plateformes (ballons stratosphériques, drones ou satellites).

Selon un exemple de réalisation, un usager est relié aux réseaux par une boucle locale Wifi comprenant un mât central équipé de plusieurs terminaux d'abonnés non géostationnaire et géostationnaire de panneaux solaires.

Selon une variante de réalisation, les réseaux GEO et NGSO opèrent dans les mêmes bandes de fréquence selon des principes de protections mutuelles, notamment par la technique dite de l'évitement de l'arc géostationnaire par le réseau NGSO.

L'invention concerne aussi un procédé pour l'échange d'informations numériques entre un ou plusieurs fournisseurs de contenu et un ou plusieurs usagers, et entre plusieurs usagers, lesdites informations numériques étant transportées via le système de télécommunication selon l'invention, caractérisé en ce qu'il comporte au moins les étapes suivantes:
- un premier fournisseur de contenu F₁ délivre son contenu dans au moins un premier nano-cache N₁ situé auprès des usagers, et le nano-cache stocke une partie ou l'ensemble du contenu reçu selon des règles préétablies, au travers d'un premier réseau à satellite GEO R₁,
- dans le même temps, le fournisseur de contenu délivre le contenu dans au moins un premier micro-cache M₁ maintenu par un premier réseau à satellite géostationnaire R₁, le premier micro-cache stocke la totalité des contenus émis par le fournisseur de contenu,
- les usagers Uᵢ consultent le contenu mémorisé dans le premier nano-cache N₁,
- lorsque le contenu requis par un utilisateur est présent dans le premier nano-cache N₁, alors le premier nano-cache délivre ce contenu à l'utilisateur Ui,
- lorsque le contenu requis n'est pas présent dans le premier nano-cache N₁, alors le contenu est recherché dans un autre micro-cache, une requête est émise et transite au travers du réseau local auquel est connecté l'utilisateur demandeur de ce contenu, puis via un réseau à véhicules en orbite basse R2 auquel est rattaché le réseau local de l'utilisateur, la requête transite au travers de la boucle B₁, via le premier nano-cache N₁, via la première station d'abonné SN₁ au réseau R₂, via les véhicules non géostationnaires NG₁ et les stations d'accès SAN₁, lorsque les services requis sont des services temps réel, alors la transaction est effectuée directement via le réseau R₂ depuis la boucle B₁.

La requête pour rechercher le contenu dans un micro-cache est transmis, éventuellement, au travers d'un réseau terrestre T₁.

Le procédé utilise des réseaux non terrestres intégrés dans le réseau Internet pour l'échange de données et la diffusion de contenu.

D'autres caractéristiques et avantages de la présente invention apparaitront mieux à la lecture de la description d'exemples de réalisation donnés à titre illustratif et nullement limitatif, annexé des figures qui représentent :
- La figure 1, une représentation du monde divisé en plusieurs régions,
- La figure 2, une représentation des échanges entre plusieurs CDN régionaux (ou zones de cache régionales),
- La figure 3, un exemple d'architecture selon l'invention, et
- La figure 4, un exemple d'implémentation du système au niveau d'un utilisateur.

Afin de mieux faire comprendre l'invention, la description qui suit est donnée à titre illustratif pour la diffusion de contenus véhiculés par le réseau Internet.

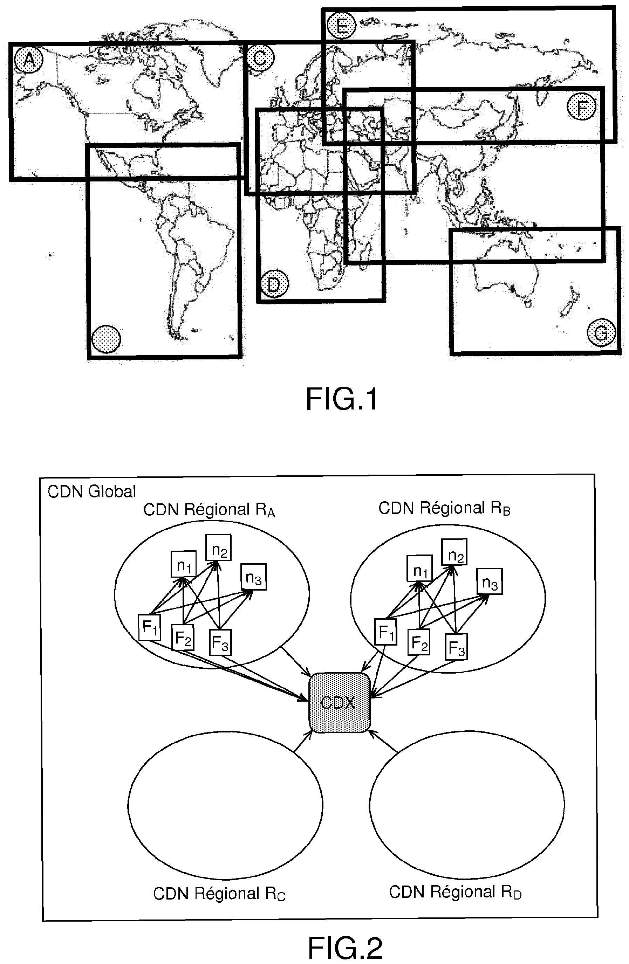

La figure 1 représente un exemple d'organisation globale d'un réseau de fourniture de contenu. Le réseau est considéré comme un CDN global. Chaque région A : Amérique du Nord, B : Amérique du Sud, C : Europe et Moyen orient, D : Afrique et Europe du sud, E : Eurasie, F : Moyen Orient et Asie du Sud Est, G : Océanie est définie afin de pouvoir être couverte de manière radioélectrique par un satellite géostationnaire pour le service de petites stations de réception ou station d'usager du réseau GEO en tout point de cette zone par un seul amplificateur de puissance et par une seule antenne, un seul signal diffusé en tout point. Chacune des zones est contrôlée par un CDN régional R_{A}, R_{B}, R_{C}, R_{D} qui est connecté aux autres CDN des autres zones au travers d'un CDN inter échange, CDX (figure 2).

La figure 2 explicite le contrôle des flux des CDN régionaux dans leur zone respective. Dans chacune des zones, tous les fournisseurs de contenus (Fⱼ) désirant accéder aux nano-caches nᵢ des usagers du CDN global sont coordonnés par le CDN régional pour les usagers régionaux ou bien par les autres CDN régionaux. Afin d'avoir accès aux nano-caches destinés à une liste d'usagers ou utilisateurs finaux, les fournisseurs de contenu suivent par exemple la procédure suivante :
- un agrément est engagé par chaque fournisseur de contenu auprès de chaque CDN régional afin de lui permettre d'accéder aux nano-caches des usagers finaux. L'agrément consiste, par exemple, dans le respect d'une charte sur la teneur du contenu, la neutralité du réseau, le respect des droits de l'enfant, ou le paiement d'un abonnement, le volume maximum engagé par mois, la gestion des droits d'auteur, etc.
- lorsqu'un fournisseur de contenu Fᵢ désire émettre un nouveau contenu dans les nano-caches nᵢ des utilisateurs, il émet une requête vers le contrôleur régional. Le contrôleur régional valide ou non l'accès au réseau CDN et autorise la transmission vers les nano-caches, ou une liste de nano-caches. Ceux-ci acquittent la bonne réception du contenu selon des principes connus de l'homme du métier. Dans le cas où le contenu n'a pas été transmis correctement, une nouvelle transmission est demandée par l'utilisateur.

Le contenu est stocké dans chaque nano-cache le plus proche d'un usager. A chaque utilisation du contenu, un jeton est transmis vers le fournisseur de contenu et vers le contrôleur régional du CDN afin de permettre la gestion des droits d'utilisation du contenu.

L'utilisation du contenu stocké dans les nano-caches pourra être gérée en fonction des accords mis en place avec les fournisseurs de contenu: à la demande des usagers (potentiellement géré par un « aggrégateur » de contenu intermédiaire lors de consultations du Web par exemple), ou en mode diffusion (que ce soit généraliste, ou bien suivant une structuration de chaîne de diffusion localement adaptée à chaque groupe d'usagers ou même pour chaque usager en fonction de leurs habitudes). On retrouvera ainsi dans les nano-caches: le journal télévisé, des évènements sportifs sélectionnés en fonction des préférences détectées selon les usagers présents dans la boucle locale, des séquences de publicités adaptées localement, en consultation par exemple, des vidéos à la demande, des journaux quotidiens, hebdomadaires, mensuels, généralistes ou spécialisés en fonction des demandes ou des préférences de la population de la boucle locale.

L'un des objectifs de l'invention est de transmettre le contenu issu d'un fournisseur de contenu via un satellite géostationnaire au niveau d'un nano-cache d'un ensemble d'usagers; le contenu retenu (Cd) dans le nano-cache est fonction des profils des usagers finaux et le contenu rejeté (Cr) est celui qui ne correspond pas à ces profils, la gestion étant réalisée par le gestionnaire du nano-cache, ce gestionnaire étant placé indifféremment dans le nano-cache ou l'infrastructure du CDN.

Lorsqu'un usager désire consulter un contenu (Cr) non retenu dans un nano-cache, ce contenu (Cr) est transmis via le réseau NGSO connecté à un micro-cache situé au niveau d'une station d'accès (aussi appelée station de connexion) du réseau NGSO. Un algorithme de routage du CDN régional permet de trouver le « meilleur » micro-cache du réseau, ce qui va permettre d'assurer la meilleure performance de distribution de contenu : l'algorithme de routage n'ayant pas identifié le contenu dans le nano-cache, le prochain cache de proximité sera le micro-cache le plus proche connecté au travers du réseau NGSO au travers d'une station d'accès.

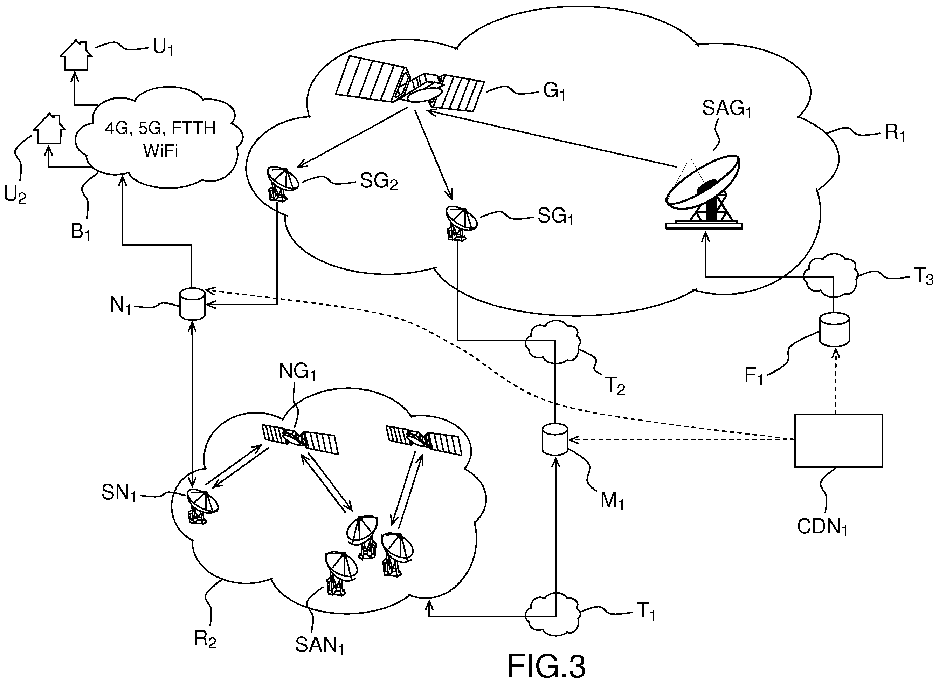

La figure 3 schématise un exemple d'architecture permettant la mise en oeuvre du procédé selon l'invention.

Un fournisseur de contenu F₁ accède au réseau à satellite géostationnaire R₁ via une station d'accès au réseau géostationnaire SAG₁. Le contenu est diffusé sur la région de diffusion, notamment vers une station d'abonné au réseau géostationnaire SG₁ et une station d'abonné au réseau géostationnaire SG₂. La station d'abonné SG₁ est connectée à un micro-cache M₁ qui stocke tous les contenus reçus en provenance de tous les fournisseurs de contenus. La station d'abonné au réseau stationnaire, SG₁, SG₂ est connectée à un nano-cache N₁ qui stocke les contenus en fonction des règles qui lui auront été pré définies. Le nano-cache N₁ est connecté avec une boucle locale B₁, cette boucle locale permet l'interconnexion du nano-cache N₁ avec des usagers U₁, U₂, etc. Dans le cas où le contenu consulté ou utilisé par les usagers U₁ ou U₂, ne peut être trouvé dans le nano-cache N₁, les usagers U₁ ou U₂ sont connectés à un micro-cache M₁ au travers d'un réseau non géostationnaire NGSO R₂, via d'une part une station d'abonné au réseau non géostationnaire SN₁ - connectée à B₁ - et d'autre part une station d'accès au réseau non géostationnaire SAN₂ - connectée à M₁, au travers des véhicules NGSO NG₁. L'ensemble de la gestion des accès au contenu est géré par l'opérateur du CDN, CON₁. En ce qui concerne les services temps réel, comme les jeux en réseau par exemple, un usager, U₁ par exemple, sera connecté à l'Internet via la boucle d'accès B₁, directement au travers du réseau NGSO, R₂: le nano-cache N₂ est alors transparent.

Le réseau comprend un CDN régional comprenant un algorithme de routage adapté à déterminer un micro-cache à utiliser pour trouver le contenu requis par un usager et qui n'est pas stocké dans un nano-cache proche de l'usager.

Le réseau à véhicules non géostationnaires R₂, comprend, par exemple, la station d'accès au réseau SAN₁, une station d'usagers réseau à véhicules non géostationnaires SN₁, un véhicule en orbite basse NG₁, comprenant des moyens adaptés à l'échange de données à faible latence entre la station d'accès SAN₁ et la station d'usagers SN₁.

Une station d'abonné permet notamment d'être connectée simultanément ou successivement avec le réseau géostationnaire et un véhicule non géostationnaire.

L'une des fonctions d'un CDN régional est de gérer l'accès au satellite géostationnaire par les stations fournisseurs de contenu afin d'optimiser la distribution du contenu dans un nano-cache, en gérant les droits d'accès et de distribution, tout en minimisant les coûts de distribution pour les créateurs de contenu. La demande d'accès émise par un fournisseur de contenu sera gérée selon des techniques connues de mode d'accès d'une station d'abonné à un réseau satellite en mode aléatoire. Simultanément à tous les nano-caches, un CDN régional reçoit toutes les demandes de transmission de contenu, comme un abonné à tous les fournisseurs de sa zone régionale. Il reçoit aussi tous les contenus correspondants. Un CDN régional est connecté à des serveurs terrestres. Il est alors possible à un CDN régional d'établir une cartographie des nano-caches et/ou des micro-caches les plus proches pour accéder à un ou des contenus situés sur d'autres nano-caches dans un temps très court.

Les caches (micro ou macro) sont interconnectés avec les stations d'abonnés ou les stations d'accès directement ou via des réseaux terrestres Tᵢ, en fonction de la proximité ou de l'éloignement de caches vis-à-vis de ces stations et des contraintes de qualité de service.

Un utilisateur peut être mobile et changer de CDN. Lorsqu'un utilisateur quitte un nano CDN, un micro-CDN, ou un CDN régional, son profil de consommation de contenu peut être partagé, s'il l'accepte, selon des procédés connus de l'Homme du métier.

Les fournisseurs de contenu sont par exemple dotés de stations de type VSAT de petit diamètre, typiquement inférieur à 120cm, et de faible puissance de transmission, par exemple, quelque Watt, permettant de transmettre des débits de quelques Mbps. Ces petites stations de faible puissance sont associées à des panneaux solaires, par exemple, ce qui les rend autonomes en énergie et indépendantes de tout réseau. Chacune de ces stations accèdent à un satellite placé sur la région d'intérêt grâce à une fréquence de transmission choisie dans la gamme Ka (27/30 GHz) ou Ku (12/14 GHz), un satellite géostationnaire recevant ces émissions grâce à une antenne rendue fortement sensible possédant un facteur de mérite important et un nombre important de pinceaux étroits, contrairement aux satellites classiques de radio diffusion qui utilisent plutôt des stations d'émission terrestres de très grands diamètres (plusieurs mètres) et de très grande puissance d'émission (plusieurs centaines de Watts).

Le satellite géostationnaire G₁, figure 3, reçoit le signal comportant le contenu à diffuser et fourni par le fournisseur de contenu. Le signal est amplifié par le satellite géostationnaire et transmis vers les stations de nano-caches des différents groupes usagers du système qui sélectionnent le contenu à stocker au plus près d'un usager. Le signal est diffusé et transmis une seule fois, soit en bande Ka (18/20 GHz), soit en bande Ku (11/13 GHz). Le cas échéant, un processeur numérique de signal, non représenté pour des raisons de simplification de figure, est positionné au niveau du satellite géostationnaire et adapté à traiter les signaux reçus en provenance des fournisseurs de contenu afin de les reconditionner avant changement de fréquence, et transmission vers la terre. Ce traitement est connu de l'homme du métier et ne sera donc pas explicité.

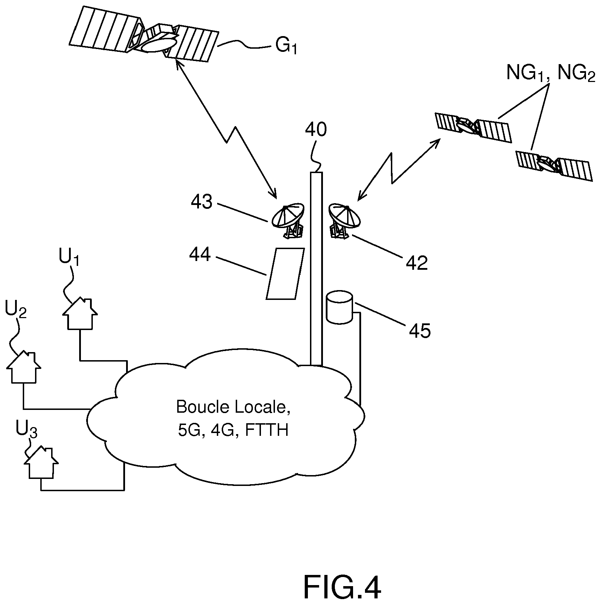

La figure 4 est un exemple d'architecture d'une boucle locale sur laquelle plusieurs utilisateurs sont abonnés. Plusieurs usagers Ui sont reliés aux réseaux satellitaires et non satellitaires par une boucle locale 5G, 4G, FTTH ou autre comprenant un mât central 40 équipé de plusieurs terminaux satellitaires NGSO, 42 et GEO, 43, de panneaux solaires 44 permettant l'apport d'énergie au fonctionnement du système. Des modules de télécommunication, modulateurs, démodulateurs des réseaux GEO et NGEO, des moyens de stockage équipent le mât central 40.

Un exemple de mise en oeuvre de terminaux peut être le suivant : une station d'abonné peut avoir la double fonction de station d'abonné de réseau GEO, SG₂ et de réseau NGSO, SN₁. La station pourra être dotée d'une capacité de transmission simultanée avec les deux réseaux ou bien de manière successive: l'utilisation de la capacité GEO ne sera mise en oeuvre que lorsque la capacité NGSO ne sera pas utilisée, la fonction GEO n'étant pas prioritaire.

L'invention trouve son intérêt dans le fait que des nano-caches peuvent être déployés de manière progressive en fonction des usagers situés dans la boucle et des évolutions des technologies de stockage des mémoires de masse, dont les coûts progressent très vite. Les nano-caches pourront avoir au départ des capacités limitées et voir leur capacité augmenter progressivement. Au contraire, les micro-caches, placés dans les réseaux d'infrastructures, pourront être gérés comme des infrastructures de stockage de très grandes capacités comme les fermes de données telles qu'elles sont connues à l'heure actuelle, physiquement co-localisées, ou bien sous la forme d'un « cloud » si nécessaire. La différence entre les nano-caches et les micro-caches résident donc essentiellement dans leur capacité de stockage et la mise à niveau de leur capacité de stockage. Dans ce contexte, l'architecture du système proposée distribue donc la complexité de la gestion des ressources de stockage des contenus et de la mise à niveau des capacités de stockage.

L'invention peut être mise en oeuvre dans un système s'appuyant sur une constellation de satellites NGSO évitant l'orbite des satellites GEO pour le partage du spectre. Ceci permet le partage du même terminal usager lorsque ce terminal est pointable automatiquement, les modes GEO et NGSO pouvant être exclusif l'un de l'autre ou simultanés avec deux voies.

L'invention trouve son application dans les zones éloignées des centres urbains, où il est difficile de déployer des réseaux terrestres enterrés à fibres optiques ou des réseaux sans fil millimétriques pour des raisons de coût : la densité des utilisateurs n'est pas assez importante pour espérer un retour sur investissement suffisant. La solution utilisant des satellites non géostationnaires, en orbite basse, offre des délais de transmission de plusieurs dizaines de millisecondes, comparables à ceux d'un réseau à fibre optique et permet un complément avantageux à la fibre optique.

L'architecture selon l'invention offre une extension aux réseaux terrestres, en assurant un accès aux mêmes services sans apporter de modification des protocoles, avec une même qualité de service et d'expérience pour les usagers, en conservant la compatibilité des exigences de latence et de sécurité. L'invention permet aussi de soulager le besoin en capacité des satellites non-géostationnaires, le contenu étant en général souvent le même parmi tous les usagers. L'infrastructure mise en place présente donc une perspective de pérennité par rapport à un système NGSO.

L'avantage de cette solution est qu'elle offre de forte capacité de croissance : avec des moyens de stockage locaux, la bande perçue par les usagers est quasiment infinie car ils peuvent télécharger très rapidement un volume de plus en riche très rapidement (il suffit d'augmenter des capacités de stockage en bénéficiant des progrès des technologies correspondantes, sans changer de moyens de transmission dans les réseaux). Les modifications sont donc locales, avec des investissements progressifs en fonction des usages locaux des abonnés; sans avoir à systématiser l'approche sur tout le réseau.

## Revendications

1. - Système de télécommunication pour la transmission d'informations numériques entre au moins un fournisseur de contenu (F₁), au moins un ensemble d'usagers Ui, comportant au moins les éléments suivants :
• un réseau à satellites géostationnaires (R₁) comprenant au moins un satellite géostationnaire (G₁), au moins une station d'accès (SAG₁) en liaison avec un ou plusieurs fournisseurs de contenu (F₁), et au moins une station d'abonné au satellite géostationnaire (SG₁ ou SG₂),
• un réseau à véhicules non géostationnaires (R₂) comprenant au moins une station d'accès au réseau (SAN₁), au moins une station d'usagers au réseau de véhicules non-géostationnaires (SN₁), au moins un véhicule en orbite basse (NG₁) comprenant des moyens adaptés à l'échange de données à faible latence entre une station d'accès au réseau (SAN₁) et le réseau de véhicules non-géostationnaires (SN₁),
• une boucle locale (B₁) comprenant plusieurs usagers Uᵢ,
• un nano-cache (N₁) connecté à la station d'abonné SG₂ du réseau GEO R1 et adapté à stocker le contenu en provenance des fournisseurs de contenu (Fi, avec i au moins égal à 1) en fonction du profil des usagers, le nano-cache (N₁) est aussi connecté à la boucle locale (B1) et à la station d'abonnés (SN₁) du réseau NGSO (R₂),
• un micro-cache (M₁) pour le stockage de contenu issu du ou des fournisseurs de contenu (F₁), contenu reçu au travers de l'une des stations d'abonné (SG₁) au satellite géostationnaire (G₁); le micro-cache (M₁) étant aussi connecté du réseau NGSO (R₂) via des stations d'accès (SAN₁), le micro-cache (M₁) étant doté d'une capacité de stockage plus importante que le nano-cache (N₁), (M₁) stockant a priori tout le contenu en provenance du satellite géostationnaire (G₁),
• au moins un CDN (CDN₁), comprenant un algorithme de routage adapté à déterminer un micro-cache à utiliser pour trouver le contenu requis par un usager et qui n'est pas stocké dans un nano-cache proche de l'usager.

2. - Système selon la revendication 1 **caractérisé en ce qu'**il comporte des moyens de gestion de la mobilité des usagers abonnés au niveau des réseaux locaux.

3. - Système selon l'une des revendications 1 ou 2 **caractérisé en ce que** la boucle locale est un réseau d'accès terrestre.

4. - Système selon l'une des revendications 1 à 2 **caractérisé en ce qu'**un réseau à véhicules en orbite basse est un réseau de satellites non géostationnaires.

5. - Système selon l'une des revendications 1 à 3 **caractérisé en ce qu'**un réseau à véhicules en orbite basse comprend un ballon stratosphérique ou un drone ou un ensemble composé de satellites non-géostationnaires, de ballons stratosphèriques et de drones.

6. - Système selon l'une des revendications 1 ou 3 ou 5, **caractérisé en ce qu'**une station d'abonné est dotée d'une seule antenne et d'un seul modem, ladite antenne et ledit modem permettant d'accéder simultanément ou successivement à un satellite GEO et ou à un véhicule NGSO.

7. - Système selon l'une des revendications 1 ou 4 ou 6, **caractérisé en ce que** les réseaux GEO et NGSO opèrent dans les mêmes bandes de fréquences selon des principes de protections mutuelles.

8. - Système selon l'une des revendications précédentes, **caractérisé en ce qu'**un usager est relié aux réseaux par une boucle locale B₁ en Wifi comprenant un mât central (40) équipé de plusieurs terminaux d'abonnés NGSO, (42) et GEO, (83), de panneaux solaires (84).

9. - Procédé pour l'échange d'informations numériques entre un ou plusieurs fournisseurs de contenu et un ou plusieurs usagers, et entre plusieurs usagers, lesdites informations numériques étant transportées via le système de télécommunication selon l'une des revendications 1 à 8, **caractérisé en ce qu'**il comporte au moins les étapes suivantes :
• un fournisseur de contenu (F₁) délivre son contenu dans au moins un nano-cache (N₁) situé auprès des usagers, et le nano-cache stocke une partie ou l'ensemble du contenu reçu selon des règles préétablies, au travers d'un réseau à satellite GEO (R₁),
• dans le même temps, le fournisseur de contenu délivre le contenu dans au moins un micro-cache (M₁) maintenu par un réseau à satellite GEO (R₁), le micro-cache stocke la totalité des contenus émis par le fournisseur de contenu,
• les usagers (Uᵢ) consultent le contenu mémorisé dans le nano-cache (N₁),
• lorsque le contenu requis par un utilisateur est présent dans le nano-cache (N₁), alors le nano-cache délivre ce contenu à l'utilisateur (Ui),
• lorsque le contenu requis n'est pas présent dans le nano-cache (N₁), alors le contenu est recherché dans un autre micro-cache, une requête est émise au travers du réseau local auquel est connecté l'usager demandeur de ce contenu, puis via un réseau à véhicules en orbite basse (R₂) auquel est rattaché le réseau local de l'utilisateur, la requête transite au travers de la boucle (B₁), via le nano-cache (N₁), via la station d'abonné (SN₁) au réseau (R₂), via les véhicules (NG₁) et les stations d'accès (SAN₁), lorsque les services requis sont des services temps réel, alors la transaction est effectuée directement via le réseau R₂ depuis la boucle (B₁).

10. - Procédé selon la revendication 9 **caractérisé en ce que** la requête pour rechercher le contenu dans un micro-cache est transmise au travers d'un réseau terrestre T₁.

11. - Procédé selon la revendication 9 **caractérisé en ce que** l'on diffuse des continus véhiculés par Internet.

## Patentansprüche

1. Telekommunikationssystem zur Übertragung digitaler Informationen zwischen mindestens einem Inhaltsanbieter (F₁) und mindestens einer Gesamtheit von Benutzern Ui, wobei es mindestens die folgenden Elemente aufweist:
• ein geostationäres Satellitennetzwerk (R₁), das mindestens einen geostationären Satelliten (G₁), mindestens eine mit einem oder mehreren Inhaltsanbietern (F₁) verknüpfte Zugangsstation (SAG₁) und mindestens eine geostationäre Satelliten-Teilnehmerstation (SG₁ oder SG₂) umfasst,
• ein Netzwerk nicht-geostationärer Fahrzeuge (R₂), das mindestens eine Zugangsstation zu dem Netzwerk (SAN₁), mindestens eine Station von Benutzern des Netzwerks nicht-geostationärer Fahrzeuge (SN₁), mindestens ein Fahrzeug in niedriger Umlaufbahn (NG₁) umfasst, das Mittel umfasst, die für den Austausch von Daten mit geringer Latenz zwischen einer Zugangsstation zum Netzwerk (SAN₁) und dem Netzwerk nicht-geostationärer Fahrzeuge (SN₁) angepasst sind,
• eine Teilnehmeranschlussleitung (B₁), die mehrere Benutzer Ui umfasst,
• einen Nano-Cachespeicher (N₁), der mit der Teilnehmerstation SG₂ des GEO-Netzwerks R1 verbunden und angepasst ist, den von den Inhaltsanbietern stammenden Inhalt (Fi, mit i mindestens gleich 1) in Abhängigkeit vom Profil der Benutzer zu speichern, wobei der Nano-Cachespeicher (N₁) auch mit der Teilnehmeranschlussleitung (B1) und mit der Teilnehmerstation (SN₁) des NGSO-Netzwerks (R₂) verbunden ist,
• einen Mikro-Cachespeicher (M₁) für das Speichern von Inhalt von dem oder den Inhaltsanbietern (F₁), wobei der Inhalt mittels einer der geostationären Satelliten (G₁)-Teilnehmerstationen (SG₁) empfangen wird; wobei der Mikro-Cachespeicher (M₁) auch mit dem NGSO-Netzwerk (R₂) über Zugangsstationen (SAN₁) verbunden ist, wobei der Mikro-Cachespeicher (M₁) mit einer höheren Speicherkapazität als der Nano-Cachespeicher (N₁) ausgestattet ist, wobei (M₁) von vornherein den gesamten dem geostationären Satelliten (G₁) stammenden Inhalt speichert,
• mindestens ein CDN (CDN₁), das einen Routing-Algorithmus umfasst, der angepasst ist, einen zu verwendenden Mikro-Cachespeicher zu bestimmen, um den von einem Benutzer benötigten Inhalt zu finden, und der nicht in einem Nano-Cachespeicher nahe dem Benutzer gespeichert wird.

2. System nach Anspruch 1 **dadurch gekennzeichnet, dass** es Mittel zur Verwaltung der Beweglichkeit der Benutzer aufweist, die in Bezug auf örtliche Netzwerke Teilnehmer sind.

3. System nach einem der Ansprüche 1 oder 2, **dadurch gekennzeichnet, dass** die Teilnehmeranschlussleitung ein terrestrisches Zugangsnetzwerk ist.

4. System nach einem der Ansprüche 1 bis 2, **dadurch gekennzeichnet, dass** ein Fahrzeugnetzwerk in niedriger Umlaufbahn ein Netzwerk von nicht-geostationären Satelliten ist.

5. System nach einem der Ansprüche 1 bis 3, **dadurch gekennzeichnet, dass** ein Fahrzeugnetzwerk in niedriger Umlaufbahn einen Stratosphärenballon oder eine Drohne oder eine Gruppe aus nicht-geostationären Satelliten, Stratosphärenballons und Drohnen umfasst.

6. System nach einem der Ansprüche 1 oder 3 oder 5, **dadurch gekennzeichnet, dass** eine Teilnehmerstation mit einer einzigen Antenne und einem einzigen Modem ausgerüstet ist, wobei die Antenne und der Modem erlauben, gleichzeitig oder nacheinander auf einen GEO-Satelliten und/oder auf ein NGSO-Fahrzeug zuzugreifen.

7. System nach einem der Ansprüche 1 oder 4 oder 6, **dadurch gekennzeichnet, dass** die Netzwerke GEO und NGSO in denselben Frequenzbändern nach den Grundsätzen des gegenseitigen Schutzes tätig sind.

8. System nach einem der vorhergehenden Ansprüche, **dadurch gekennzeichnet, dass** ein Benutzer mit den Netzwerken durch eine Teilnehmeranschlussleitung B₁ per WLAN verbunden ist, umfassend einen mit mehreren Teilnehmerendgeräten NGSO (42) und GEO (83) ausgestatteten Zentralmast (40) von Sonnenkollektoren (84).

9. Verfahren zum Austausch digitaler Informationen zwischen einem oder mehreren Inhaltsanbietern und einem oder mehreren Benutzern, und zwischen mehreren Benutzern, wobei die digitalen Informationen mittels des Telekommunikationssystems nach einem der Ansprüche 1 bis 8 übertragen werden, **dadurch gekennzeichnet, dass** es mindestens die folgenden Schritte aufweist:
• ein Inhaltsanbieter (F₁) liefert seinen Inhalt in mindestens einen Nano-Cachespeicher (N₁), der bei den Benutzern angeordnet ist, und der Nano-Cachespeicher speichert einen Teil oder die Gesamtheit des Inhalts, der gemäß den vorher festgelegten Regeln empfangen wird, mittels eines GEO-Satellitennetzwerks (R₁),
• gleichzeitig liefert der Inhaltsanbieter den Inhalt in mindestens einen Mikro-Cachespeicher (M₁), der durch ein GEO-Satellitennetzwerk (R₁) unterhalten wird, wobei der Mikro-Cachespeicher die Gesamtheit der von dem Inhaltsanbieter ausgegebenen Inhalte speichert,
• die Benutzer (Uᵢ) konsultieren den in dem Nano-Cachespeicher (N₁) gespeicherten Inhalt,
• wenn der von einem Benutzer benötigte Inhalt in dem Nano-Cachespeicher (N₁) vorhanden ist, liefert der Nano-Cachespeicher diesen Inhalt an den Benutzer (Uᵢ),
• wenn der benötigte Inhalt in dem Nano-Cachespeicher (N₁) nicht vorhanden ist, wird der Inhalt in einem anderen Mikro-Cachespeicher gesucht, eine Anforderung wird über das örtliche Netzwerk ausgegeben, mit dem der diesen Inhalt abfragende Benutzer verbunden ist, danach durchläuft die Anforderung, über ein Fahrzeugnetzwerk in niedriger Umlaufbahn (R₂), mit dem das örtliche Netzwerk des Benutzers verbunden ist, die Schleife (B₁) über den Nano-Cachespeicher (N₁), über die Netzwerk (R₂)-Teilnehmerstation (SN₁), über die Fahrzeuge (NG₁) und die Zugangsstationen (SAN₁), wobei, wenn die benötigten Dienste Echtzeitdienste sind, die Transaktion direkt über das Netzwerk R₂ von der Schleife (B₁) aus durchgeführt wird.

10. Verfahren nach Anspruch 9, **dadurch gekennzeichnet, dass** die Anforderung, den Inhalt in einem Mikro-Cachespeicher zu suchen, über ein terrestrisches Netzwerk T₁ übertragen wird.

11. Verfahren nach Anspruch 9, **dadurch gekennzeichnet, dass** durch das Internet transportiertes Streaming verbreitet wird.

## Claims

1. - Telecommunication system for the transmission of digital information between at least one content provider (F₁), at least one set of users Uᵢ, comprising at least the following elements:
• a network (R₁) of geostationary satellites comprising at least one geostationary satellite (G₁), at least one access station (SAG₁) connected to one or more content providers (F₁), and at least one geostationary satellite subscriber station (SG₁ or SG₂),
• a network (R₂) of non-geostationary vehicles comprising at least one network access station (SAN₁), at least one non-geostationary vehicle network user station (SN₁), at least one vehicle (NG₁) in low earth orbit comprising means adapted to the exchange of low-latency data between a network access station (SAN₁) and the non-geostationary vehicle network (SN₁),
• a local loop (B₁) comprising a plurality of users Uᵢ,
• a nanocache (N₁) connected to the subscriber station (SG₂) of the GEO network R₁ and adapted to store content from the content providers (Fᵢ, with i at least equal to 1) as a function of the profile of the users, the nanocache (N₁) being also connected to the local loop (B₁) and to the subscriber station (SN₁) of the NGSO network (R₂),
• a microcache (M₁) for the storage of content from the content provider or providers (F₁) received via one of the subscriber station (SG₁) of the geostationary satellite (G₁), the microcache (M₁) being also connected to the NGSO network (R₂) via access stations (SAN₁), the microcache (M₁) having greater storage capacity than the nanocache (N₁), (M₁) storing a priori all the content from the geostationary satellite (G₁),
• at least one CDN (CON₁) comprising a routing algorithm adapted to determine a microcache to be used to find the content requested by a user that is not stored in a nanocache near the user.

2. - System according to claim 1 **characterized in that** it comprises a mobility manager of users subscribed to the local networks.

3. - System according to one of claims 1 or 2 **characterized in that** the local loop is a terrestrial access network.

4. - System according to one of claims 1 to 2 **characterized in that** a network of vehicles in low earth orbit is a network of non-geostationary satellites.

5. - System according to one of claims 1 to 3 **characterized in that** a network of vehicles in low earth orbit comprises a stratosphere balloon or a drone or a combination of non-geostationary satellites, stratosphere balloons and drones.

6. - System according to one of claims 1 or 3 or 5 **characterized in that** a subscriber station has only one antenna and only one modem, said antenna and said modem enabling simultaneous or successive access to a GEO satellite and/or to an NGSO vehicle.

7. - System according to one of claims 1 or 4 or 6 **characterized in that** the GEO and NGSO networks operate in the same frequency bands in accordance with mutual protection principles.

8. - System according to one of the preceding claims **characterized in that** a user is connected to the networks via a WiFi local loop B₁ comprising a central mast (40) equipped with a plurality of NGSO subscriber terminals (42) and GEO subscriber terminals (83) and solar panels (84).

9. - Method for the exchange of digital information between one or more content providers and one or more users, and between a plurality of users, said digital information being transported via the telecommunication system according to one of claims 1 to 8, **characterized in that** it comprises at least the following steps:
• a content provider (F₁) delivers its content into at least one nanocache (N₁) situated near the users and the nanocache stores some or all of the content received in accordance with predefined rules via a GEO satellite network (R₁),
• at the same time, the content provider delivers the content into at least one microcache (M₁) maintained by a GEO satellite network (R₁), the microcache storing all of the content transmitted by the content provider,
• the users (Uᵢ) consult the content stored in the nanocache (N₁),
• when the content requested by a user is present in the nanocache (N₁), then the nanocache delivers that content to the user (Uᵢ),
• when the requested content is not present in the nanocache (N₁), then the content is looked for in another microcache, a request is sent via the local network to which the user requesting the content is connected, then via a network of vehicles in low Earth orbit (R₂) to which the local network of the user is attached, the request transits across the loop (B₁), via the nanocache (N₁), via the subscriber station (SN₁) of the network (R₂), via the vehicles (NG₁) and the access stations (SAN₁), when the requested services are real time services, then the transaction is effected directly via the network R₂ from the loop (B₁).

10. - Method according to claim 9 **characterized in that** the request to search for the content in a microcache is transmitted across a terrestrial network T₁.

11. - Method according to claim 9 **characterized in that** it broadcasts Internet content.
